# EUROPÄISCHE PATENTSCHRIFT

(11) **EP 3 186 113 B1**
(45) Veröffentlichungstag und Bekanntmachung des Hinweises auf die Patenterteilung: **27.06.2018**
(21) Anmeldenummer: 15771505.3
(22) Anmeldetag: 21.08.2015
(51) Int. Cl.: B60R 21/264

(54) **DIFFUSOR FÜR EINEN GASGENERATOR, GASGENERATOR, GASSACKMODUL UND FAHRZEUGSICHERHEITSSYSTEM MIT EINEM SOLCHEN DIFFUSOR**
DIFFUSER FOR A GAS GENERATOR, GAS GENERATOR, GAS SACK MODULE AND VEHICLE SAFETY SYSTEM WITH SUCH A DIFFUSER
DIFFUSEUR POUR POUR UN GÉNÉRATEUR DE GAZ, GÉNÉRATEUR DE GAZ, MODULE SAC GONFLABLE ET SYSTEME DE SECURITE DE VEHICULE AVEC UN TEL DIFFUSEUR

(30) Priorität: 27.08.2014 DE 102014012495
(43) Veröffentlichungstag der Anmeldung: 05.07.2017
(73) Patentinhaber: TRW Airbag Systems GmbH, 84544 Aschau am Inn (DE)
(72) Erfinder: EBNER, Johannes, 84453 Mühldorf a. Inn (DE)
(74) Vertreter: ZF TRW Patentabteilung
(86) Internationale Anmeldenummer: PCT/EP2015/001710
(87) Internationale Veröffentlichungsnummer: WO 2016/030007

(56) Entgegenhaltungen:
- EP-A1- 1 331 143
- EP-A1- 1 935 726

## Beschreibung

Die Erfindung betrifft einen Diffusor für einen Gassackgenerator, insbesondere für einen Gasgenerator eines Airbagsystems, gemäß dem Oberbegriff des Patentanspruchs 1. Ferner betrifft die Erfindung einen Gasgenerator, ein Gassackmodul und ein Fahrzeugsicherheitssystem mit einem solchen Diffusor. Ein Diffusor der eingangs genannten Art ist beispielsweise aus EP 1 935 726 A1 bekannt.

Die EP 1 935 726 A1 beschreibt einen Diffusor für einen Gasgenerator mit einem Gehäuse, in dem radiale Ausströmöffnungen ausgebildet sind, wobei mehrere in längsaxialer Richtung aneinander angrenzende Ausströmsegmente vorgesehen sind, die jeweils eine Anzahl von in Umfangsrichtung beabstandeten Ausströmöffnungen aufweisen.

Weiterhin weist der dortige Diffusor ein Filterelement für Abbrandgase auf, das innerhalb des Gehäuses, im Bereich der Ausströmsegmente angeordnet ist, wobei das Filterelement in Bereichen zumindest zweier aneinander angrenzender Ausströmsegmente unterschiedliche Wandstärken aufweist. Ein solches Filterelement hat den Nachteil, dass Abbrandgas, das in den Filter einströmt, ungleichmäßig an die unterschiedlichen Ausströmöffnungen geleitet wird und den Diffusor daher in einer ungleichmäßigen Form verlässt. Somit kommt es, insbesondere in der Anfangsphase der Gassackbefüllung, zu unterschiedlichen und zeitlich versetzten Gaseinströmungen in den Gassack. Die Gassackbefüllung erfolgt also ungleichmäßig.

Die Aufgabe der Erfindung besteht darin, einen Diffusor für einen Gasgenerator anzugeben, der eine gleichmäßige Gassackbefüllung, insbesondere in der Anfangsphase, ermöglicht. Ferner besteht die Aufgabe der Erfindung darin, einen Gasgenerator, ein Gassackmodul und ein Fahrzeugsicherheitssystem mit einem solchen Diffusor anzugeben.

Erfindungsgemäß wird diese Aufgabe im Hinblick auf den Diffusor durch den Gegenstand des Anspruchs 1, im Hinblick auf den Gasgenerator durch den Gegenstand des Anspruchs 11, im Hinblick auf das Gassackmodul durch den Gegenstand des Anspruchs 12 und im auf das Fahrzeugsicherheitssystem durch den Gegenstand des Anspruchs 13 gelöst.

Die Erfindung beruht auf dem Gedanken, einen Diffusor für einen Gasgenerator, insbesondere einen Gasgenerator eines Airbagsystems, mit einem Gehäuse, in dem radiale Ausströmöffnungen ausgebildet sind, wobei mehrere in längsaxialer Richtung aneinander angrenzende Ausströmsegmente vorgesehen sind, die jeweils eine Anzahl von in Umfangsrichtung beabstandeten Ausströmöffnungen aufweisen, und mit einem Filterelement für Abbrandgase anzugeben. Das Filterelement ist innerhalb des Gehäuses im Bereich der Ausströmsegmente angeordnet, wobei das Filterelement in Bereichen zumindest zweier aneinander angrenzender Ausströmsegmente unterschiedliche Wandstärken aufweist. Erfindungsgemäß weist das Filterelement an einem proximalen Längsende einen Eingangsabschnitt, der eine längsaxiale Gaseintrittsöffnung umfasst, und einen Reduktionsabschnitt auf, der dem proximalen Eingangsabschnitt in Gasströmungsrichtung nachgeordnet ist, wobei sich die Wandstärke des Filterelements im Reduktionsabschnitt kontinuierlich erhöht, wobei das Filterelement weiterhin einen Auffangabschnitt aufweist, der dem Reduktionsabschnitt in Gasströmungsrichtung nachgeordnet ist, wobei das Filterelement im Auffangabschnitt eine konstante Wandstärke aufweist.

Bei der Erfindung werden die Ausströmöffnungen von einem einzigen Filterelement bedeckt, bzw. ist ein einziges Filterelement im Bereich von Ausströmsegmenten angeordnet. Insofern können die Ausströmöffnungen mit nur geringem Abstand zueinander angeordnet sein, sodass sich die Massenströme der durch die längsaxial beabstandeten Ausströmöffnungen geführten Abbrandgase nur geringfügig unterscheiden. Es hat sich gezeigt, dass die erfindungsgemäße Ausbildung bzw. Abfolge eines Eingangsabschnitts, eines Reduktionsabschnitts und eines Auffangabschnitts besonders vorteilhaft ist, um die Massenströme des Abbrandgases beim Austritt aus dem Diffusor anzugleichen und gleichzeitig die Filterbelastung zu reduzieren Dabei sind die Wandstärken des Filterelements vorzugsweise so angepasst, dass die Massenströme durch die einzelnen, in längsaxialer Richtung entlang des Gehäuses voneinander beabstandeten Ausströmöffnungen, zumindest in der Anfangsphase der Gassackbefüllung, ähnlich bzw. angeglichen sind. Damit wird eine gleichmäßige Gassackbefüllung erreicht. Vorzugsweise sind die Anzahl, Form, Größe und/oder Anordnung der Ausströmöffnungen derart mit den Wandstärken des Filterelements abgestimmt, dass sich, zumindest in der Anfangsphase der Gassackbefüllung, im Wesentlichen gleiche Massenströme des Abbrandgases durch alle Ausströmöffnungen ergeben.

Aneinander angrenzende Ausströmsegmente können jeweils eine unterschiedliche Anzahl und/oder eine unterschiedliche Größe von in Umfangsrichtung beabstandeten Ausströmöffnungen umfassen. Die Wandstärke des Filterelements, die sich vorzugsweise in Gasströmungsrichtung kontinuierlich oder segmentweise erhöht, bewirkt eine Düsenfunktion. Das in das Filterelement einströmende Abbrandgas wird somit beschleunigt. Folglich treten entlang des Filterelements unterschiedliche Gasströmungsgeschwindigkeiten auf. Um der Erhöhung der Gasströmungsgeschwindigkeit bzw. der Beschleunigung des Abbrandgases in einem Bereich des Filterelements mit kontinuierlich abnehmendem Innendurchmesser entgegenzuwirken, hat es sich vorteilhaft erwiesen, segmentweise unterschiedliche Gasausströmquerschnitte im Gehäuse bereitzustellen. Dabei kann der Gesamtquerschnitt der Gasausströmöffnungen in jedem Ausströmsegment entweder durch die Anzahl der Ausströmöffnungen und/oder deren Größe eingestellt werden. Vorzugsweise sind die Anzahl und/oder die Größe der Ausströmöffnungen in den einzelnen Ausströmsegmenten so angepasst, dass sich über alle Ausströmöffnungen hinweg ein im Wesentlichen gleicher Massenstrom des ausströmenden Abbrandgases ergibt. Damit geht außerdem eine gleichmäßige Filterdurchströmung einher, wodurch sich die Wirksamkeit des Filterelements verbessert.

Bei einer bevorzugten Ausgestaltung der vorliegenden Erfindung ist die Anzahl und/oder die Größe der in Umfangsrichtung beabstandeten Ausströmöffnungen in einem mittleren Ausströmsegment größer als in einem oder mehreren randseitigen Ausströmsegment(en). Überraschend hat sich gezeigt, dass sich eine erhöhte Ausströmfläche, bzw. ein erhöhter Ausströmquerschnitt in einen mittleren Bereich des Filterelements günstig auf die Angleichung der Massenströme auswirkt. Im Bereich eines Eingangsabschnitts des Filterelements weist das Gehäuse vorzugsweise eine kleinere Anzahl von Ausströmöffnungen auf als im mittleren Ausströmsegment. Damit wird verhindert, dass das Filterelement zu stark belastet bzw. zu stark durchströmt wird.

Vorzugsweise weist das Filterelement einen längsaxialen Gasströmungskanal auf, der unterschiedliche, insbesondere zumindest abschnittsweise kontinuierlich sich verjüngende und/oder erweiternde, Querschnittsdurchmesser umfasst. Vorzugsweise korrelieren die unterschiedlichen Querschnittsdurchmesser mit der Wandstärke des Filterelements. Insbesondere kann das Filterelement eine zylinderförmige Außenkontur aufweisen, sodass sich eine gute Abdichtung gegen eine Innenfläche des Gehäuses ergibt. Gleichzeitig ergibt sich eine indirekte Proportionalität zwischen der Wandstärke des Filterelements und dem Querschnittsdurchmesser des Gasströmungskanals. Je größer die Wandstärke des Filterelements ist, desto kleiner ist der Querschnittsdurchmesser des Gasströmungskanals.

Der Gasströmungskanal kann einen Durchgangskanal bilden, der an einem distalen Längsende des Filterelements offen ist. Alternativ kann der Gasströmungskanal an einem distalen Längsende des Filterelements geschlossen sein. Mit anderen Worten kann das Filterelement einen geschlossenen Endbereich aufweisen. Insbesondere ist vorgesehen, dass der geschlossene Endbereich eine Längserstreckung aufweist, die größer als die maximale Wandstärke des Filterelements ist. Der geschlossene Endbereich ermöglicht einerseits die Ablagerung von Abbrandprodukten, beispielsweise Schlacke und/oder Partikeln, und wirkt andererseits als Wärmesenke, die zu einer guten Kühlung der Abbrandgase beiträgt. Bei der Erfindung ist vorgesehen, dass das Filterelement an einem proximalen Längsende einen Eingangsabschnitt aufweist, der eine längsaxiale Gaseintrittsöffnung umfasst. Der Eingangsabschnitt kann im montierten Zustand des Diffusors innerhalb eines Gasgenerators einer Anzündeinheit bzw. einer Brennkammer des Gasgenerators zugewandt sein. Damit wird ermöglicht, dass Abbrandgase längsaxial aus der Brennkammer in das Filterelement einströmen können. Das Filterelement ist vorzugsweise in einer Filterkammer angeordnet, die durch das Gehäuse begrenzt ist.

In diesem Zusammenhang wird darauf hingewiesen, dass das Gehäuse sowohl ein separates Gehäuse des Diffusors sein kann, als auch integral das Gehäuse eines Gasgenerators bilden kann. Insbesondere kann das Gehäuse des Diffusors einstückig mit einem Gasgeneratorgehäuse ausgebildet sein. Alternativ kann das Gehäuse des Diffusors ein separates Bauteil bilden, sodass der erfindungsgemäße Diffusor mit unterschiedlichen Anzündeinheiten zu einem Gasgenerator kombinierbar ist.

Im Eingangsabschnitt weist das Filterelement in vorteilhaften Ausführungsformen eine konstante Wandstärke auf. Mit anderen Worten umfasst der Eingangsabschnitt des Filterelements einen konstanten, zylinderförmigen Gasströmungskanal. Der Eingangsabschnitt des Filterelements ist einem hohen Gasdruck ausgesetzt. Durch die zylinderförmige Gestaltung des Eingangsabschnitts wird ermöglicht, dass einströmendes Abbrandgas sanft an ein erstes Ausströmsegment mit Ausströmöffnungen abgeleitet wird, ohne dass es zu einer Beschädigung des Filterelements kommt. Die zylinderförmige Gestaltung des Eingangsabschnitts schont somit das Filterelement bzw. das Filtermaterial. Bei der Erfindung weist das Filterelement einen Reduktionsabschnitt auf, der dem proximalen Eingangsabschnitt in Gasströmungsrichtung nachgeordnet ist. Im Reduktionsabschnitt kann sich die Wandstärke des Filterelements kontinuierlich erhöhen. Folglich weist der Reduktionsabschnitt einen Gasströmungskanal auf, der sich in Gasströmungsrichtung kontinuierlich verjüngt. Durch den sich verjüngenden Gasströmungskanal wird ein Staudruck erzeugt, sodass Abbrandgas dazu gezwungen wird, in radialer Richtung zu den Ausströmöffnungen auszuweichen. Damit wird gezielt der Massenstrom des Abbrandgases durch das Filterelement und die Ausströmöffnung der einzelnen Ausströmsegmente beeinflusst bzw. gesteuert. Auf diese Weise können die Massenströme des aus den einzelnen Ausströmöffnungen austretenden Abbrandgases individuell eingestellt und insbesondere aneinander angeglichen werden. Bei der Erfindung weist das Filterelement einen Auffangabschnitt auf, der dem Reduktionsabschnitt in Gasströmungsrichtung nachgeordnet ist. Das Filterelement weist im Auffangabschnitt eine konstante Wandstärke auf. Es hat sich gezeigt, dass die Abfolge eines zylinderförmigen Eingangsabschnitts, eines konusförmigen Reduktionsabschnitts und eines weiteren zylinderförmigen Auffangabschnitts besonders vorteilhaft ist, um die Massenströme des Abbrandgases beim Austritt aus dem Diffusor anzugleichen und gleichzeitig die Filterbelastung zu reduzieren. Insgesamt ermöglicht diese Gestaltung des Filterelements eine besonders gleichmäßige Gassackbefüllung.

In weiteren bevorzugten Ausführungsformen ist vorgesehen, dass das Filterelement einen Erweiterungsabschnitt aufweist, der dem Auffangabschnitt in Gasströmungsrichtung nachgeordnet ist. Im Erweiterungsabschnitt weist das Filterelement vorzugsweise eine sich kontinuierlich verringernde Wandstärke auf. Mit anderen Worten zeichnet sich der Erweiterungsabschnitt dadurch aus, dass er einen Gasströmungskanal aufweist, dessen Querschnittdurchmesser sich kontinuierlich erhöht bzw. erweitert. Der Erweiterungsabschnitt führt zu einem Druckabfall des einströmenden Abbrandgases. Dies ermöglicht es, dass sich Abbrandprodukte, beispielsweise Schlacke und/oder Partikel gut innerhalb des Filterelements, insbesondere in einem Endbereich, ablagern können. Das Filtermaterial wird so von Abbrandprodukten freigehalten. Dies erhöht die Wirksamkeit des Filterelements.

In einer weiteren bevorzugten Ausführungsform der Erfindung ist das Filterelement achsensymmetrisch bzgl. einer Symmetrieachse ausgebildet, die senkrecht zu einer Längsachse des Filterelements angeordnet ist. Im Allgemeinen kann vorgesehen sein, dass das Filterelement eine rotationssymmetrische Gestaltung aufweist. Die Rotationsachse des Filterelements wird im Rahmen der Anmeldung als Längsachse des Filterelements bezeichnet. Durch die achsensymmetrische Gestaltung des Filterelements bzgl. einer Symmetrieachse, die senkrecht zur Längsachse bzw. Rotationsachse des Filterelements ausgerichtet ist, wird die Montage des Filterelements erheblich vereinfacht. Insbesondere kann das Filterelement in einer beliebigen Orientierung, d.h. orientierungsfrei, in das Gehäuse des Diffusors eingesetzt werden, ohne die Funktionalität des Filterelements zu beeinträchtigen. Das achsensymmetrisch ausgebildete Filterelement weist insofern ein Poka-Yoke-Design auf.

Ein nebengeordneter Aspekt der Erfindung betrifft einen Gasgenerator, insbesondere toroidförmig ausgebildet, vorzugsweise für einen Fahrerairbag, und/oder insbesondere rohrförmig ausgebildet, vorzugsweise für einen Beifahrerairbag und/oder Knieairbag und/oder Curtainairbag und/oder Seitenairbag und/oder Fondinsassenairbag und/oder Fußgängerschutzairbag, mit einem Diffusor der zuvor beschriebenen Art. Ein solcher Gasgenerator bewirkt eine besonders gleichmäßige Gassackbefüllung. Außerdem kann der Gasgenerator eine relativ kleine Baugröße aufweisen, da durch die erfindungsgemäße Gestaltung des Filterelements ohne Funktionseinschränkungen kleine Diffusordurchmesser erreichbar sind.

Ein weiterer nebengeordneter Aspekt der Erfindung betrifft ein Gassackmodul, insbesondere Fahrerairbagmodul und/oder Beifahrerairbagmodul und/oder Seitenairbagmodul und/oder Fondinsassenairbagmodul und/oder Fußgängerschutzairbagmodul und/oder Curtainairbagmodul, mit einem zuvor beschriebenen Gasgenerator und/oder einem zuvor beschriebenen Diffusor.

Ferner wird im Rahmen der vorliegenden Anmeldung ein Fahrzeugsicherheitssystem mit einem zuvor erläuterten Gassackmodul, einem zuvor beschriebenen Gasgenerator und/oder einem Diffusor nach der eingangs beschriebenen Art offenbart und beansprucht.

Die Erfindung wird im Folgenden anhand von Ausführungsbeispielen unter Bezugnahme auf die beigefügten, schematischen Figuren näher erläutert. Darin zeigen:
- Fig. 1: eine Querschnittsansicht durch einen erfindungsgemäßen Diffusor nach einem bevorzugten Ausführungsbeispiel mit einem Filterelement, das einen Durchgangskanal bildet;
- Fig. 2: eine Querschnittsansicht durch einen erfindungsgemäßen Diffusor nach einem weiteren bevorzugten Ausführungsbeispiel, wobei das Filterelement einen längsaxial geschlossenen Endbereich aufweist;
- Fig. 3: eine Querschnittsansicht durch einen erfindungsgemäßen Diffusor nach einem weiteren bevorzugten Ausführungsbeispiel, wobei das Filterelement ein Poka-Yoke-Design aufweist;
- Fig. 4: eine Seitenansicht eines erfindungsgemäßen Diffusors nach einem weiteren bevorzugten Ausführungsbeispiel, wobei mehrere Ausströmsegmente mit unterschiedlicher Anzahl von Ausströmöffnungen gezeigt sind;
- Fig. 5: eine Querschnittsansicht durch den Diffusor gemäß Fig. 4; und
- Fig. 6: eine graphische Darstellung der Massenströme durch unterschiedliche Ausströmsegmente im Vergleich zwischen einem Diffusor mit einem zylindrischen Filterelement und dem Diffusor gemäß Fig. 4.

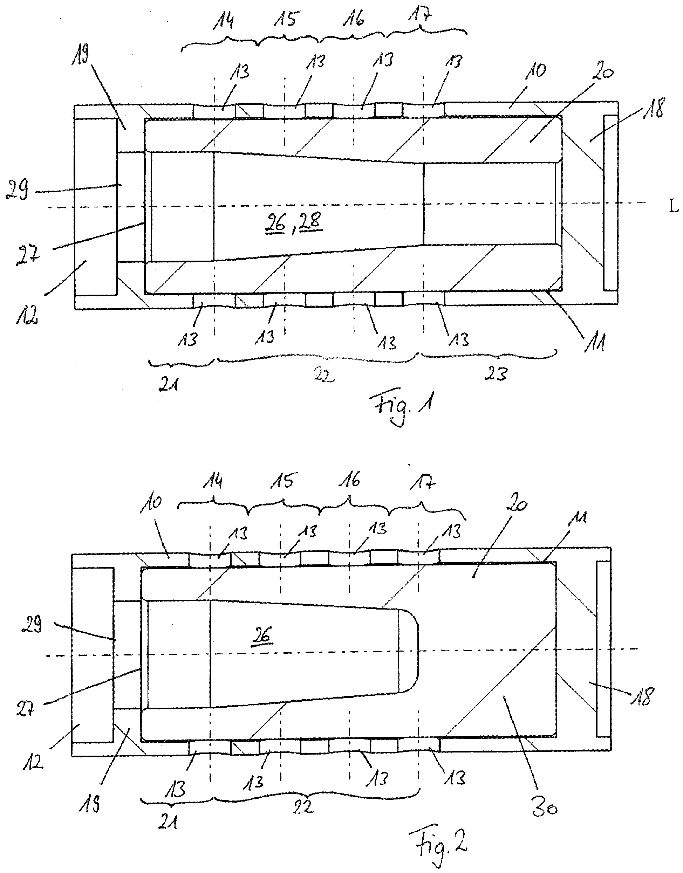

Fig. 1 zeigt einen Diffusor für einen Gasgenerator. Der Diffusor ist insbesondere zum Einsatz bei Gasgeneratoren geeignet, die Teil eines Airbagsystems sind. Vorzugsweise sind derartige Diffusoren als Teil eines Gasgenerators mit einer Anzündeinheit fluidverbunden bzw. sind in Fluidverbindung bringbar, sodass Abbrandgase, die durch Aktivierung der Anzündeinheit entstehen, über den Diffusor an einen Gassack des Airbagsystems abgegeben werden. Beim Abbrand von Treibstoffen der Anzündeinheit bzw. des Gasgenerators entstehen oftmals Abbrandprodukte, insbesondere Schlacke und/oder andere Partikel, beispielsweise Rußpartikel, die nicht in den Gassack gelangen sollen. Daher weist der Diffusor ein Filterelement auf, das derartige Abbrandprodukte zurückhält.

Im Allgemeinen umfasst der Diffusor ein Gehäuse 10, das eine Filterkammer 11 umschließt. Das Gehäuse 10 ist vorzugsweise aus Metallblech geformt. Insbesondere kann das Gehäuse 10 rohrförmig gestaltet sein. Dabei kann das Gehäuse 10 insgesamt ein Gehäuse eines Gasgenerators bilden und ferner eine Brennkammer 12 umfassen, in welcher ein Treibstoff und/oder eine Anzündeinheit, beide nicht dargestellt, angeordnet ist.

Es ist auch möglich, dass das Gehäuse 10 ein von einem Gasgeneratorgehäuse getrenntes Bauteil darstellt. Insofern kann der Diffusor ein separates Bauteil bilden, das mit unterschiedlichen Anzündeinheiten zu verschiedenen Gasgeneratoren kombinierbar ist. Das Gehäuse 10 kann dazu im Bereich der Brennkammer 12 einen Verbindungsabschnitt aufweisen, so dass der Diffusor mit einer Anzündeinheit fest verbindbar ist. Der Verbindungsabschnitt kann beispielsweise als Crimp- oder Falzabschnitt ausgebildet sein.

In dem Gehäuse 10 sind mehrere Ausströmöffnungen 13 angeordnet. Die Ausströmöffnungen 13 weisen eine Öffnungs- bzw. Bohrungsachse auf, die im Wesentlichen radial zu einer Längsachse L des Gehäuses 10 verläuft. Insbesondere sind sowohl in Umfangsrichtung des Gehäuses 10, als auch in Längsrichtung des Gehäuses 10 mehrere Ausströmöffnungen 13 vorgesehen. Konkret sind mehrere Ausströmöffnungen in Umfangsrichtung auf einer gemeinsamen Umfangslinie angeordnet und bilden jeweils ein Ausströmsegment 14, 15, 16, 17.

Wie bei dem Ausführungsbeispiel gemäß Fig. 1 gut erkennbar ist, weist der dargestellte Diffusor in seinem Gehäuse 10 vier Ausströmsegmente 14, 15, 16, 17 auf, die jeweils wenigstens zwei Ausströmöffnungen 13 umfassen. Im Rahmen der vorliegenden Anmeldung werden die einzelnen Ausströmsegmente 14, 15, 16, 17 in Gasströmungsrichtung als erstes Ausströmsegment 14, zweites Ausströmsegment 15, drittes Ausströmsegment 16 und viertes Ausströmsegment 17 bezeichnet. Das zweite Ausströmsegment 15 ist somit dem ersten Ausströmsegment 14 in Gasströmungsrichtung nachgeordnet. Auf das zweite Ausströmsegment 15 folgt in Gasströmungsrichtung das dritte Ausströmsegment 16. Das vierte Ausströmsegment 17 bildet das in Gasströmungsrichtung letzte Ausströmsegment und ist dem dritten Ausströmsegment 16 unmittelbar nachgeordnet. Insbesondere bilden das erste und vierte Ausströmsegment 13, 17 bei den Ausführungsbeispielen gemäß Fig. 1 bis 3 jeweils ein randseitiges Ausströmsegment. Das zweite und dritte Ausströmsegment 15, 16 bilden mittlere Ausströmsegmente.

Das Gehäuse 10 weist ferner eine Trennwand 19 auf, die die Brennkammer 12 von der Filterkammer 11 trennt. Die Trennwand 19 ist mit einer Verbindungsöffnung 29 ausgestattet, die eine Fluidverbindung von der Brennkammer 12 zur Filterkammer 11 ermöglicht. Die Verbindungsöffnung 29 kann auch noch durch einen nicht dargestellten Verschluss, beispielsweise durch eine sogenannte Verdämmung, wie sie eine dünne Metallfolie aus z.B. Aluminium oder Stahl darstellt, verschlossen sein, wobei im Aktivierungsfall des Gasgenerators, also bei Abbrand eines Treibstoffs in der Brennkammer 12, der Verschluss dann geöffnet bzw. aufgerissen wird, um eine Fluidverbindung von der Brennkammer 12 zur Filterkammer 11 zu ermöglichen. Am längsaxial gegenüberliegenden Ende der Filterkammer 11 ist eine Abschlusswand 18 vorgesehen, die integraler Bestandteil des Gehäuses 10 ist. Die Abschlusswand 18 verschließt die Filterkammer 11 an ihrem distalen Längsende. Am proximalen Längsende ist die Filterkammer 11 durch die Trennwand 19 begrenzt. Insgesamt begrenzen Trennwand 19, die Abschlusswand 18 und eine Umfangswandung des Gehäuses 10 die Filterkammer 11.

Innerhalb der Filterkammer 11 ist das Filterelement 20 angeordnet. Das Filterelement 20 weist eine rotationssymmetrische Grundform auf. Die Außenkontur des Filterelements 20 ist im Wesentlichen zylinderförmig, sodass sich das Filterelement 20 in die zylinderförmige Innenkontur des Gehäuses 10 gut einpasst. Insbesondere bedeckt das Filterelement 20 die Ausströmöffnungen 13 im Gehäuse 10.

Innerhalb des Filterelements 20 ist ein Gasströmungskanal 26 ausgebildet, der koaxial zur Verbindungsöffnung 29 in der Trennwand 19 des Gehäuses 10 ausgerichtet ist. Mit anderen Worten ist der Gasströmungskanal 26 koaxial zur Filterkammer 11 und/oder zur Brennkammer 12 ausgerichtet. Das Filterelement 20 erstreckt sich in Längsrichtung vollständig durch die Filterkammer 11 und berührt sowohl die Abschlusswand 18, als auch die Trennwand 19.

Wie in den Fig. 1-3 und 5 gut erkennbar ist, weist der Gasströmungskanal 26 unterschiedliche Querschnittsdurchmesser auf. Insbesondere verjüngt sich der Querschnittsdurchmesser des Gasströmungskanals 26 in Längsrichtung des Filterelements 20 bzw. in Gasströmungsrichtung. Entsprechend erhöht sich die Wandstärke des Filterelements 20 in Gasströmungsrichtung.

Das Filterelement 20 lässt sich in mehrere Abschnitte unterteilen. Insbesondere ist ein Eingangsabschnitt 21 vorgesehen, der am proximalen Längsende des Filterelements 20 bzw. der Filterkammer 11 angeordnet ist. Im Eingangsabschnitt 21 umfasst das Filterelement 20 eine konstante Wandstärke und der Gasströmungskanal 26 einen konstanten Querschnittsdurchmesser. Mit anderen Worten ist der Eingangsabschnitt 21 des Filterelements 20 hohlzylinderförmig gestaltet. Der Querschnittsdurchmesser des Gasströmungskanals 26 im Eingangsabschnitt 21 bzw. der Innendurchmesser des Eingangsabschnitts 21 entspricht vorzugsweise im Wesentlichen dem Querschnittsdurchmesser der Verbindungsöffnung 29 in der Trennwand 19.

Der Eingangsabschnitt 21 erstreckt sich im Wesentlichen von der Trennwand 19 bis zu den Bohrungsachsen der Ausströmöffnungen 13 des ersten Ausströmsegments 14. Dies gilt allgemein für die Ausführungsbeispiele gemäß Figuren 1 bis 3.

An dem Eingangsabschnitt 21 schließt sich ein Reduktionsabschnitt 22 an. Im Reduktionsabschnitt 22 weist das Filterelement 20 eine Wandstärke auf, die sich in Gasströmungsrichtung kontinuierlich erhöht. Mit anderen Worten verjüngt sich der Gasströmungskanal 26 im Reduktionsabschnitt 22 in Gasströmungsrichtung kontinuierlich. Der Reduktionsabschnitt 22 weist insofern eine im Wesentlichen kegelstumpfförmige Innenkontur auf. Bei den Ausführungsbeispielen gemäß Figuren 1 bis 2 erstreckt sich der Reduktionsabschnitt 22 von der Bohrungsachse der Ausströmöffnungen 13 des ersten Ausströmsegments 14 bis zur Bohrungsachse der Ausströmöffnungen 13 des vierten Ausströmsegments 17. Die Ausströmöffnungen 13 des zweiten Ausströmsegments 15 und des dritten Ausströmsegments 16 sind daher bei den Ausführungsbeispielen gemäß Figuren 1 und 2 vollständig vom Reduktionsabschnitt 22 des Filterelements 20 bedeckt.

Bei dem Ausführungsbeispiel gemäß Fig. 1 schließt sich an den Reduktionsabschnitt 22 ein Auffangabschnitt 23 an. Im Auffangabschnitt 23 weist das Filterelement 20 eine konstante Wandstärke auf, wobei die Wandstärke im Auffangabschnitt 23 größer als im Eingangsabschnitt 21 ist. Entsprechend umfasst der Gasströmungskanal 26 im Auffangabschnitt 23 einen konstanten Querschnittsdurchmesser, der kleiner als der Querschnittsdurchmesser des Gasströmungskanals 26 im Eingangsabschnitt 21 ist. Der Auffangabschnitt 23 erstreckt sich von den Bohrungsachsen der Ausströmöffnungen 13 des vierten Ausströmsegments 17 bis zur Abschlusswand 18 der Filterkammer 11.

Im Allgemeinen ist vorgesehen, dass die Innenumfangsflächen der einzelnen Abschnitte des Filterelements 20 stetig bzw. stufenlos ineinander übergehen. Dabei ist es bevorzugt, dass sich der Querschnittsdurchmesser des Gasströmungskanals 26 ausgehend von der Trennwand 19 in Gasströmungsrichtung bis zur Abschlusswand 18 oder zumindest bis zur Mitte des Filterelements 20 insgesamt reduziert, wobei der Reduktionsgrad abschnittsweise unterschiedlich sein kann. Dies gilt für alle Ausführungsbeispiele der Erfindung.

Das Ausführungsbeispiel des Diffusors gemäß Fig. 2 unterscheidet sich von dem Ausführungsbeispiel gemäß Fig. 1 dadurch, dass anstelle des Auffangabschnitts 23 das Filterelement 20 einen geschlossenen distalen Endbereich aufweist. Der Gasströmungskanal 26 bildet insofern ein Sackloch im Filterelement 20. Das Sacklock endet mit dem distalen Ende des Reduktionsabschnitts 22 auf Höhe einer Bohrungsachse einer Ausströmöffnung 13 des vierten Ausströmsegments 17. An den Reduktionsabschnitt 22 schließt sich ein geschlossener Abschnitt 30 an, der sich bis zur Abschlusswand 18 erstreckt. Der geschlossene Abschnitt 30 weist die Form eines Vollzylinders auf, der vollständig mit Filtermaterial gefüllt ist. Die Länge des geschlossenen Abschnitts 30, also die Erstreckung des geschlossenen Abschnitts 30 in längsaxialer Richtung des Filterelements 20, ist vorzugsweise größer als die maximale Wandstärke des Filterelements 20 im Eingangsabschnitt 21 und/oder Reduktionsabschnitt 22. Der geschlossene Abschnitt 30 wirkt als Wärmesenke und sorgt für eine gute Abkühlung des Abbrandgases, das durch das Filterelement 20 geleitet wird. Dies reduziert die thermische Belastung auf einen Gassack und wirkt sich daher vorteilhaft auf die Gassackentfaltung aus. Ferner kann der geschlossene Abschnitt 30 und/oder der distale Endbereich des Reduktionsabschnitts 22 Schlacke bzw. Abbrandprodukte aufnehmen. So wird effizient verhindert, dass Abbrandprodukte in den Gassack gelangen und/oder das Filterelement 20 im Durchströmungsbereich verstopfen.

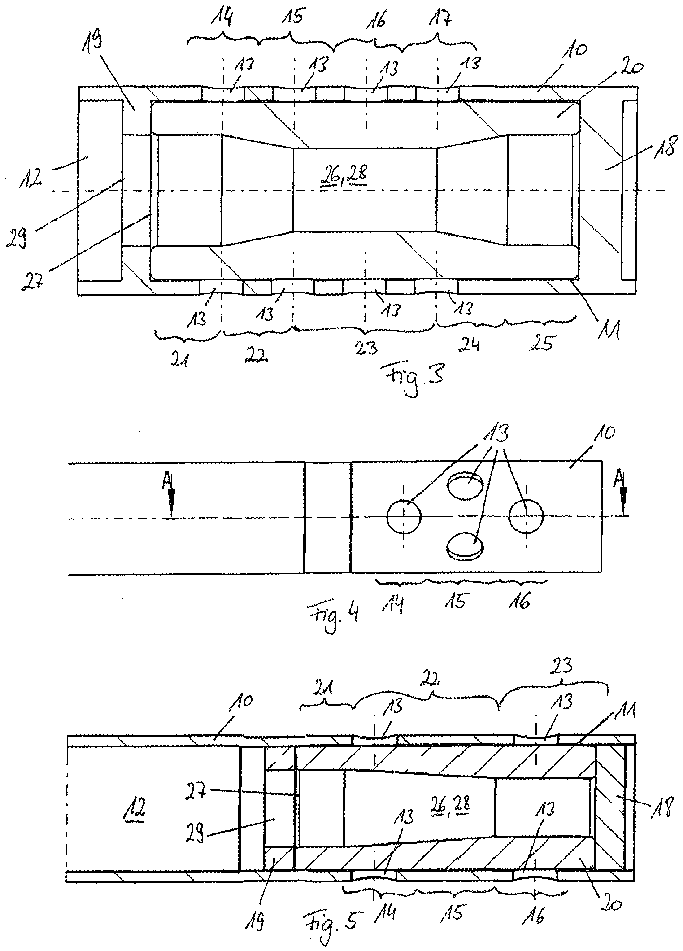

In Fig. 3 ist ein alternatives Ausführungsbeispiel eines erfindungsgemäßen Diffusors gezeigt. Dabei ist das Gehäuse 10 des Diffusors gemäß Fig. 3 identisch zum Gehäuse 10 des Diffusors gemäß Figuren 1 und 2 ausgebildet.

Das Filterelement 20 des Ausführungsbeispiels gemäß Fig. 3 unterscheidet sich von den Filterelementen 20 der Ausführungsbeispiele gemäß Figuren 1 und 2 dadurch, dass das Filterelement 20 eine achsensymmetrische Gestaltung aufweist. Insbesondere ist das Filterelement 20 achsensymmetrisch zu einer Symmetrieachse ausgebildet, die senkrecht zur Längsachse L ausgerichtet ist. Konkret verläuft die Symmetrieachse des Filterelements 20 bei dem vorliegenden Ausführungsbeispiel durch eine Bohrungsachse der Ausströmöffnungen 13 des dritten Ausströmsegments 16. Das Ausführungsbeispiel gemäß Fig. 3 weist insofern ein Poka-Yoke-Design auf und erlaubt somit einen orientierungsfreien Einbau des Filterelements 20 in das Gehäuse 10.

Das Filterelement 20 gemäß Fig. 3 umfasst einen Eingangsabschnitt 21, der im Wesentlichen hohlzylinderförmig gestaltet ist. An den Eingangsabschnitt 21 schließt sich ein Reduktionsabschnitt 22 an, der eine kegelstrumpfförmige Innenkontur aufweist. Dabei erhöht sich die Wandstärke des Reduktionsabschnitts 22 in Gasströmungsrichtung bzw. der Querschnittsdurchmesser des Gasströmungskanals 26 verjüngt sich in Gasströmungsrichtung. Der Übergang vom Eingangsabschnitt 21 in den Reduktionsabschnitt 22 erfolgt auf Höhe der Bohrungsachse der Ausströmöffnungen 13 des ersten Ausströmsegments 14. Der Reduktionsabschnitt 22 erstreckt sich bis zur Bohrungsachse der Ausströmöffnungen 13 des zweiten Ausströmsegments 15.

An den Reduktionsabschnitt 22 schließt sich der Auffangabschnitt 23 an, der sich bis zur Bohrungsachse der Ausströmöffnung 13 des vierten Ausströmsegments 17 erstreckt. Insoweit ist das Filterelement 20 gemäß Fig. 3 hinsichtlich seines konstruktiven Aufbaus analog zum Ausführungsbeispiel gemäß Fig. 2 gestaltet, wobei sich lediglich die Längen der einzelnen Abschnitte des Filterelements 20 unterscheiden.

Zusätzlich ist bei dem Ausführungsbeispiel gemäß Fig. 3 vorgesehen, dass sich an den Reduktionsabschnitt 22 in Gasströmungsrichtung ein Erweiterungsabschnitt 24 abschließt. Der Erweiterungsabschnitt 24 ist achsensymmetrisch zum Reduktionsabschnitt 22 ausgebildet. Insofern weist der Erweiterungsabschnitt 24 eine Wandstärke auf, die sich in Gasströmungsrichtung kontinuierlich reduziert. Mit anderen Worten ist der Gasströmungskanal 26 im Erweiterungsabschnitt 24 im Wesentlichen kegelstumpfförmig ausgebildet, wobei sich der Querschnittsdurchmesser des Gasströmungskanals 26 im Erweiterungsabschnitt 24 kontinuierlich erweitert. An den Erweiterungsabschnitt 24 schließt sich in Gasströmungsrichtung ein Endabschnitt 25 an, in dem das Filterelement 20 eine konstante Wandstärke und folglich der Gasströmungskanal 26 einen konstanten Querschnittsdurchmesser aufweist. Der Endabschnitt 25 ist achsensymmetrisch zum Eingangsabschnitt 21 ausgebildet. Insofern weisen der Eingangsabschnitt 21 und der Endabschnitt 25 denselben Innendurchmesser bzw. dieselbe Wandstärke auf.

Die Diffusoren bei den Ausführungsbeispielen gemäß Figuren 1 und 3 weisen jeweils einen Gasströmungskanal 26 auf, der als Durchgangskanal 28 ausgebildet ist. Mit anderen Worten ist der Gasströmungskanal 26 sowohl am proximalen Längsende, als auch am distalen Längsende des Filterelements 20 offen. Dabei können sich Schlacke und/oder Abbrandpartikel bei dem Ausführungsbeispiel gemäß Fig. 1 im Auffangabschnitt 23 ablagern und beeinträchtigen daher die Gasströmung vom Gasströmungskanal durch das Filterelement 20 zu den Ausströmöffnungen 13 nicht. Bei dem Ausführungsbeispiel gemäß Fig. 3 bewirkt der Erweiterungsabschnitt 24 einen zusätzlichen Druckabfall, sodass sich Schlacke und/oder Abbrandprodukte einfach im Endabschnitt 25 ablagern und dort gehalten werden. Außerdem ist durch die achsensymmetrische Gestaltung des Filterelements 20 bei dem Ausführungsbeispiel gemäß Fig. 3 sichergestellt, dass Montagefehler vermieden werden. Die achsensymmetrische Gestaltung des Filterelements 20 ermöglicht die Montage des Filterelements 20 in beliebiger Orientierung innerhalb des Gehäuses 10, ohne die Funktionalität des Diffusors zu beeinträchtigen.

Die Figuren 4 und 5 zeigen ein weiteres Ausführungsbeispiel eines erfindungsgemäßen Diffusors, bei dem besonderes Augenmerk auf die Gestaltung der einzelnen Ausströmsegmente 14, 15, 16, 17 gelegt wurde. In der Seitenansicht gemäß Fig. 4 ist erkennbar, dass das Gehäuse 10 des Diffusors insgesamt drei Ausströmsegmente 14, 15, 16 aufweist. Dabei sind im ersten Ausströmsegment 14 zwei Ausströmöffnungen 13 angeordnet. Im zweiten Ausströmsegment 15 sind wenigsten drei, vorzugsweise vier, Ausströmöffnungen 13 vorgesehen. Das dritte Ausströmsegment 16 umfasst wiederum zwei Ausströmöffnungen 13 und ist insofern analog zum ersten Ausströmsegment 14 gestaltet. Das erste und dritte Ausströmsegment 14, 16 bilden jeweils ein randseitiges Ausströmsegment des Gehäuses 10. Das zweite Ausströmsegment 15 bildet ein mittleres Ausströmsegment des Gehäuses 10.

Fig. 5 zeigt einen Querschnitt durch den Diffusor gemäß Fig. 4 entlang der Linie A-A in Fig. 4. Es ist erkennbar, dass das Gehäuse 10 eine Abschlusswand 18 und eine Trennwand 19 mit einer Verbindungsöffnung 29 umfasst. Die Trennwand 19, die Abschlusswand 18 und eine Umfangswandung des Gehäuses 10 begrenzen die Filterkammer 11. Innerhalb der Filterkammer 11 ist ein Filterelement 20 angeordnet, das einen Gasströmungskanal 26 bildet. Der Gasströmungskanal 26 ist als Durchgangskanal 28 geformt.

Im Wesentlichen ähnelt die konstruktive Gestaltung des Filterelements 20 dem Filterelement 20 gemäß Fig. 1. Insbesondere ist ein Eingangsabschnitt 21 vorgesehen, der im Wesentlichen hohlzylinderförmig ausgebildet ist. Das Filterelement 20 weist im Eingangsabschnitt 21 folglich eine konstante Wandstärke bzw. der Gasströmungskanal 26 einen konstanten Querschnittsdurchmesser auf. An den Eingangsabschnitt 21 schließt sich ein Reduktionsabschnitt 22 an, dessen Wandstärke sich in Gasströmungsrichtung kontinuierlich erhöht. Mit anderen Worten verjüngt sich der Gasströmungskanal 26 im Reduktionsabschnitt 22, wobei die Verjüngung in Gasströmungsrichtung, d.h. vom proximalen Längsende zum distalen Längsende des Filterelements 20, verläuft. An den Reduktionsabschnitt 22 schließt sich ein zylinderförmiger Auffangabschnitt 23 auf. Im Auffangabschnitt 23 weist das Filterelement 20 eine konstante Wandstärke auf, die größer als die Wandstärke im Eingangsabschnitt 21 ist. Insofern umfasst der Auffangabschnitt 23 einen Gasströmungskanal 26 mit konstantem Querschnittsdurchmesser, wobei der Querschnittsdurchmesser des Gasströmungskanals 26 im Auffangabschnitt 23 kleiner als im Eingangsabschnitt 21 ist.

Bei dem Ausführungsbeispiel gemäß Fig. 5 ist erkennbar, dass das erste Ausströmsegment 14 vollständig im Bereich des Reduktionsabschnitts 22 angeordnet ist. Insbesondere sind die Ausströmöffnungen 13 des ersten Ausströmsegments 14 in einem proximalen Bereich des Reduktionsabschnitts 22 angeordnet. Die Ausströmöffnungen 13 des zweiten Ausströmsegments 15 sind hingegen in einem distalen Bereich des Reduktionsabschnitts 22 vorgesehen. Die Ausströmöffnungen 13 des dritten Ausströmsegments 16 befinden sich auf Höhe des Auffangabschnitts 23 des Filterelements 20.

Durch die kegelstumpfförmig sich verjüngende Gestaltung des Gasströmungskanals 26 des Filterelements 20 wird eine Erhöhung der Gasgeschwindigkeit in Gasströmungsrichtung bewirkt. Um dieser Erhöhung der Gasgeschwindigkeit bzw. der Beschleunigung des Abbrandgases entgegenzuwirken, ist vorgesehen, im mittleren, insbesondere zweiten Ausströmsegment 15 eine insgesamt größere Ausströmfläche bereit zu stellen, als in den randseitigen Ausströmsegmenten bzw. im ersten und dritten Ausströmsegment 14, 16. Durch diese Gestaltung des Diffusors wird ein besonders gleichmäßiger Massenstrom von ausströmendem Abbrandgas über alle Ausströmöffnungen 13 erreicht. Schlussendlich führt dies zu einer gleichmäßigen Gassackbefüllung, insbesondere in der Anfangsphase der Gassackbefüllung.

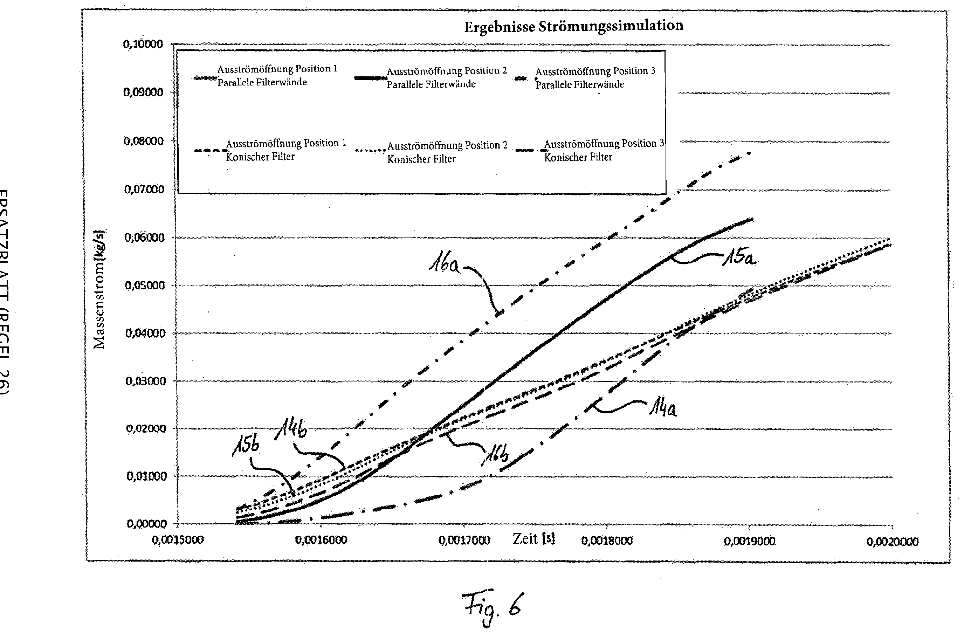

Die vorteilhaften Wirkungen des erfindungsgemäßen Diffusors sind beispielshaft in der graphischen Darstellung gemäß Fig. 6 erkennbar. Dabei zeigt Fig. 6 ein Diagramm, das den Massenstrom des Abbrandgases durch die Ausströmöffnungen 13 der einzelnen Ausströmsegmente 14, 15, 16 im zeitlichen Verlauf zeigt. Dabei sind in Fig. 6 die Daten eines Diffusors mit einem zylindrischen Filterelement 20 gemäß dem Stand der Technik und die Daten eines Diffusors gemäß dem erfindungsgemäßen Ausführungsbeispiel nach den Figuren 4 und 5 gegenübergestellt. Der Massenstromverlauf des Diffusors aus dem Stand der Technik ist in der graphischen Darstellung gemäß Fig. 6 mit dem Buchstabenzusatz a gekennzeichnet. Der Massenstromverlauf des Abbrandgases durch den erfindungsgemäßen Diffusor ist durch den Buchstabenzusatz b kenntlich gemacht.

So ist in Fig. 6 erkennbar, dass der Massenstromverlauf 14a des Diffusors mit einem zylindrischen Filterelement 20 im ersten Ausströmsegment 14 einen relativ flachen Anstieg aufweist, der erst ab etwa 1,7 ms stärker ansteigt. Demgegenüber weist der Massenstromverlauf 14b bei dem erfindungsgemäßen Diffusor mit einem Filterelement 20, das zumindest abschnittsweise einen sich konusförmig verjüngenden Gasströmungskanal 26 aufweist, einen im Wesentlichen linearen Anstieg des Massenstroms pro Zeiteinheit auf.

Der Massenstromverlauf 15a des Diffusors aus dem Stand der Technik im Bereich der Ausströmöffnung 13 des zweiten Ausströmsegments 15 zeigt nach etwa 1,65 ms einen erhöhten Anstieg, wogegen der Massenstromverlauf 15b bei dem erfindungsgemäßen Diffusor im zweiten Ausströmsegment 15 ebenfalls einen nahezu linearen Anstieg zeigt.

Bei dem aus dem Stand der Technik bekannten Diffusor ist außerdem deutlich erkennbar, dass der Massenstromverlauf 16a im Bereich des dritten Ausströmsegments 16 einen starken Anstieg zeigt. Dem gegenüber zeigt sich bei dem erfindungsgemäßen Diffusor ein Massenstromverlauf 16b im Bereich des dritten Ausströmsegments 16 der im Wesentlichen dem Massenstromverlauf im Bereich des ersten Ausströmsegments 14 und des zweiten Ausströmsegments 15 angeglichen ist. Insgesamt zeigt das Diagramm gemäß Fig. 6 deutlich, dass durch die erfindungsgemäße Gestaltung des Diffusors insgesamt ein ausgeglichener Massenstrom über alle Ausstromöffnungen 13 des Gehäuses 10 erreicht wird. Dies führt zu einer gleichmäßigen Gassackbefüllung.

Generell ist zu beachten, dass für eine wirksame Kühlung und Partikelfilterung innerhalb des Diffusors für eine bestimmte Abbrandgasmenge eine entsprechend große und wirksame Filtermasse vorzusehen ist. Speziell bei rohrförmigen Gasgeneratoren mit kleinem Querschnittsdurchmesser, konkret einem Querschnittsdurchmesser von höchstens 20 mm, insbesondere höchstens 18 mm, ist aufgrund der beengten Raumverhältnisse die Wandstärke des Filterelements 20 begrenzt, da für dass in das Filterelement 20 einströmende Abbrandgas ein ausreichend großer Querschnitt des Gasströmungskanals 26 freigehalten werden muss. Dies ist erforderlich, um den im Filterelement 20 erzeugten Staudruck ausreichend gering zu halten. Mit der erfindungsgemäßen Gestaltung des Filterelements 20 wird dies gut erreicht. Durch den zylinderförmigen Eingangsabschnitt 21 wird vermieden, dass sich ein hoher Staudruck bildet. Gleichzeitig wird durch den Reduktionsabschnitts 22, in dem sich die wirksame Durchströmfläche des Filterelements reduziert, eine gleichmäßige Verteilung der Massenströme erreicht. Die Reduktion der wirksamen Durchströmfläche des Filters im Reduktionsabschnitt 22 entspricht einer Zunahme der Wandstärke des Filterelements 20 bzw. der wirksamen Filtermasse.

Eine wesentliche Auswirkung auf den Staudruck im Bereich des Reduktionsabschnitts 22 haben die Anzahl und Größe der Ausströmöffnungen 13, die im Bereich des Reduktionsabschnitts 22 angeordnet sind. Generell können die Ausströmöffnungen 13 im Gehäuse 10 unterschiedliche Größen und Abstände zueinander aufweisen. Insbesondere kann in Längsrichtung des Diffusors die Anzahl und Größe der Ausströmöffnungen 13 unterschiedlich sein. Vorzugsweise sind Größe und Anzahl der Ausströmöffnungen 13 entlang des Gehäuses 10 derart angepasst, dass sich eine optimale Durchströmung des Filterelements 20 mit einer möglichst gleichmäßigen Filterbelastung ergibt.

Der erfindungsgemäße Diffusor kann in einem Gasgenerator integriert sein. Dabei ist im Allgemeinen vorgesehen, dass der Diffusor sowohl einen Endbereich eines Gasgenerators, als auch einen mittleren Bereich eines Gasgenerators bilden kann. Insofern kann das Gehäuse 10 eine Abschlusswand 18 aufweisen, die die Filterkammer 11 am distalen Längsende hermetisch verschließt. Es ist alternativ auch möglich, dass anstelle der Abschlusswand 18 eine weitere Trennwand 19 mit einer Verbindungsöffnung 29 vorgesehen ist, die die Filterkammer 11 mit einer weiteren Filterkammer 11 verbindet.

Die am proximalen Längsende der Filterkammer 11 vorgesehene Verbindungsöffnung 29, die die Filterkammer 11 mit der Brennkammer 12 verbindet, kann durch eine Berstmembran bzw. allgemein eine Verdämmung feuchtedicht verschlossen sein. Allgemein ist vorgesehen, dass die Filterkammer 11 hermetisch, zumindest im Sinne einer Feuchtedichtigkeit, abgeschlossen ist.

Die Brennkammer 12 kann mit Pyrotechnik gefüllt sein. Dies ist insbesondere bevorzugt, wenn es sich bei dem Gasgenerator, der mit dem erfindungsgemäßen Diffusor ausgestattet ist, um einen pyrotechnischen Gasgenerator handelt. Alternativ ist die Erfindung auch bei Hybridgasgeneratoren anwendbar, wobei anstelle der Brennkammer 12 eine Gasspeicherkammer vorgesehen sein kann.

### Bezugszeichenliste

- 10: Gehäuse
- 11: Filterkammer
- 12: Brennkammer
- 13: Ausströmöffnung
- 14: erstes Ausströmsegment
- 14a: Massenstromverlauf eines Diffusors aus dem Stand der Technik im ersten Ausströmsegment 14
- 14b: Massenstromverlauf eines erfindungsgemäßen Diffusors im ersten Ausströmsegment 14
- 15: zweites Ausströmsegment
- 15a: Massenstromverlauf eines Diffusors aus dem Stand der Technik im zweiten Ausströmsegment 15
- 15b: Massenstromverlauf eines erfindungsgemäßen Diffusors im zweiten Ausströmsegment 15
- 16: drittes Ausströmsegment,
- 16a: Massenstromverlauf eines Diffusors aus dem Stand der Technik im dritten Ausströmsegment 16
- 16b: Massenstromverlauf eines erfindungsgemäßen Diffusors im dritten Ausströmsegment 16
- 17: viertes Ausströmsegment
- 18: Abschlusswand
- 19: Trennwand
- 20: Filterelement
- 21: Eingangsabschnitt
- 22: Reduktionsabschnitt
- 23: Auffangabschnitt
- 24: Erweiterungsabschnitt
- 25: Endabschnitt
- 26: Gasströmungskanal
- 27: Gaseintrittsöffnung
- 28: Durchgangskanal
- 29: Verbindungsöffnung
- 30: geschlossener Abschnitt
- L: Längsachse

## Patentansprüche

1. Diffusor für einen Gasgenerator, insbesondere für einen Gasgenerator eines Airbagsystems, mit einem Gehäuse (10), in dem radiale Ausströmöffnungen (13) ausgebildet sind, wobei mehrere in längsaxialer Richtung aneinander angrenzende Ausströmsegmente (14, 15, 16, 17) vorgesehen sind, die jeweils eine Anzahl von in Umfangsrichtung beabstandeten Ausströmöffnungen (13) aufweisen, und mit einem Filterelement (20) für Abbrandgase, das innerhalb des Gehäuses (10) im Bereich der Ausströmsegmente (14, 15, 16, 17) angeordnet ist, wobei das Filterelement (20) in Bereichen zumindest zweier aneinander angrenzender Ausströmsegmente (14, 15, 16, 17) unterschiedliche Wandstärken aufweist,
**dadurch gekennzeichnet, dass**
das Filterelement (20) an einem proximalen Längsende einen Eingangsabschnitt (21) aufweist, der eine längsaxiale Gaseintrittsöffnung (27) umfasst, und einen Reduktionsabschnitt (22) aufweist, der dem proximalen Eingangsabschnitt (21) in Gasströmungsrichtung nachgeordnet ist, wobei sich die Wandstärke des Filterelements (20) im Reduktionsabschnitt (22) kontinuierlich erhöht, und das Filterelement (20) einen Auffangabschnitt (23) aufweist, der dem Reduktionsabschnitt (22) in Gasströmungsrichtung nachgeordnet ist, wobei das Filterelement (20) im Auffangabschnitt (23) eine konstante Wandstärke aufweist.

2. Diffusor nach Anspruch 1,
**dadurch gekennzeichnet, dass**
aneinander angrenzende Ausströmsegmente (14, 15, 16, 17) jeweils eine unterschiedliche Anzahl von in Umfangsrichtung beabstandeten Ausströmöffnungen (13) umfassen.

3. Diffusor nach Anspruch 1 oder 2,
**dadurch gekennzeichnet, dass**
aneinander angrenzende Ausströmsegmente (14, 15, 16, 17) jeweils eine unterschiedliche Größe von in Umfangsrichtung beabstandeten Ausströmöffnungen (13) umfassen

4. Diffusor nach Anspruch 2 oder 3,
**dadurch gekennzeichnet, dass**
die Anzahl und/oder Größe der in Umfangsrichtung beabstandeten Ausströmöffnungen (13) in einem mittleren Ausströmsegment (15) größer als in einem oder mehreren randseitigen Ausströmsegment(en) (14, 16) ist.

5. Diffusor nach einem der vorhergehenden Ansprüche,
**dadurch gekennzeichnet, dass**
das Filterelement (20) einen längsaxialen Gasströmungskanal (26) aufweist, der unterschiedliche, insbesondere zumindest abschnittsweise kontinuierlich sich verjüngende und/oder erweiternde, Querschnittsdurchmesser umfasst.

6. Diffusor nach Anspruch 5,
**dadurch gekennzeichnet, dass**
der Gasströmungskanal (26) einen Durchgangskanal (28) bildet, der an einem distalen Längsende des Filterelements (20) offen ist.

7. Diffusor nach Anspruch 5,
**dadurch gekennzeichnet, dass**
der Gasströmungskanal (26) einen Durchgangskanal (28) bildet, der an einem distalen Längsende des Filterelements (20) geschlossen ist.

8. Diffusor nach einem der vorhergehenden Ansprüche,
**dadurch gekennzeichnet, dass**
das Filterelement (20) im Eingangsabschnitt (21) eine konstante Wandstärke aufweist.

9. Diffusor nach einem der vorhergehenden Ansprüche,
**dadurch gekennzeichnet, dass**
das Filterelement (20) einen Erweiterungsabschnitt (24) aufweist, der dem Auffangabschnitt (23) in Gasströmungsrichtung nachgeordnet ist, wobei das Filterelement (20) im Erweiterungsabschnitt (24) eine sich kontinuierlich verringernde Wandstärke aufweist.

10. Diffusor nach einem der vorhergehenden Ansprüche,
**dadurch gekennzeichnet, dass**
das Filterelement (20) achsensymmetrisch bezüglich einer Symmetrieachse ausgebildet ist, die senkrecht zu einer Längsachse (L) des Filterelements (20) angeordnet ist.

11. Gasgenerator, insbesondere toroidförmig ausgebildet, vorzugsweise für einen Fahrerairbag, und/oder insbesondere rohrförmig ausgebildet, vorzugsweise für einen Beifahrerairbag und/oder Knieairbag und/oder Curtainairbag und/oder Seitenairbag und/oder Fondinsassenairbag und/oder Fußgängerschutzairbag, mit einem Diffusor nach einem der vorhergehenden Ansprüche.

12. Gassackmodul, insbesondere Fahrerairbagmodul und/oder Knieairbagmodul und/oder Beifahrerairbagmodul und/oder Seitenairbagmodul und/oder Fondinsassenairbagmodul Fußgängerschutzairbagmodul und/oder Curtainairbagmodul, mit einem Gasgenerator und/oder einem Diffusor nach einem der vorhergehenden Ansprüche.

13. Fahrzeugsicherheitssystem mit einem Gassackmodul, einem Gasgenerator und/oder einem Diffusor nach einem der vorhergehenden Ansprüche.

## Claims

1. Diffuser for an inflator, in particular for an inflator of an airbag system, with a housing (10) in which radial outflow openings (13) are formed, wherein a plurality of outflow segments (14, 15, 16, 17) are provided which are adjacent to one another in the longitudinal axial direction, each of which has a number of outflow openings (13) spaced apart in the circumferential direction, and with a combustion-gas filtering element (20) which is arranged within the housing (10) in the region of the outflow segments (14, 15, 16, 17), wherein the filtering element (20) has different wall thicknesses in regions of at least two outflow segments (14, 15, 16, 17) adjacent to one another,
**characterized in that**
the filtering element (20) has an inlet portion (21) at a proximal longitudinal end which comprises a longitudinal axial gas inlet opening (27) and a reduction portion (22), which is arranged downstream of the proximal inlet portion (21) in the direction of the gas flow, wherein the wall thickness of the filtering element (20) increases continuously in the reduction portion (22), and the filtering element (20) comprises a collection portion (23) which is arranged downstream of the reduction portion (22) in the direction of the gas flow, wherein the filtering element (20) has a constant wall thickness in the collection portion (23).

2. Diffuser according to claim 1,
**characterized in that**
each of the adjacent outflow segments (14, 15, 16, 17) comprises a different number of outflow openings (13) spaced apart in the circumferential direction.

3. Diffuser according to claim 1 or 2,
**characterized in that**
each of the adjacent outflow segments (14, 15, 16, 17) comprises a different size of outflow openings (13) spaced apart in the circumferential direction.

4. Diffuser according to claim 2 or 3,
**characterized in that**
the number and/or size of the outflow openings (13) spaced apart in the circumferential direction is/are greater in a central outflow segment (15) than in one or more peripheral outflow segments (14, 16).

5. Diffuser according to any one of the preceding claims,
**characterized in that**
the filtering element (20) has a longitudinal axial gas flow channel (26) comprising different, in particular at least in sections continuously tapering and/or expanding, cross-sectional diameters.

6. Diffuser according to claim 5,
**characterized in that**
the gas flow channel (26) forms a passage channel (28) which is open at a distal longitudinal end of the filtering element (20).

7. Diffuser according to claim 5,
**characterized in that**
the gas flow channel (26) forms a passage channel (28) which is closed at a distal longitudinal end of the filtering element (20).

8. Diffuser according to any one of the preceding claims,
**characterized in that**
the filtering element (20) has a constant wall thickness in the inlet portion (21).

9. Diffuser according to any one of the preceding claims,
**characterized in that**
the filtering element (20) comprises an expanding portion (24) which is arranged downstream of the collection portion (23) in the gas flow direction, wherein the filtering element (20) has a continuously decreasing wall thickness in the extending portion (24).

10. Diffuser according to any one of the preceding claims,
**characterized in that**
the filtering element (20) is formed axial symmetrically with respect to an axis of symmetry which is arranged perpendicular to a longitudinal axis (L) of the filtering element (20).

11. Inflator, in particular of toroidal design, preferably for a driver airbag, and/or in particular of tubular design, preferably for a passenger airbag and/or knee airbag and/or curtain airbag and/or side airbag and/or rear passenger airbag and/or pedestrian protection airbag, with a diffuser according to any one of the preceding claims.

12. Airbag module, in particular driver airbag module and/or knee airbag module and/or passenger airbag module and/or side airbag module and/or rear passenger airbag module and/or pedestrian protection airbag module and/or curtain airbag module, with an inflator and/or a diffuser according to any one of the preceding claims.

13. Vehicle safety system comprising an airbag module, an inflator and/or a diffuser according to any one of the preceding claims.

## Revendications

1. Diffuseur pour un générateur de gaz, en particulier pour un générateur de gaz d'un système airbag, comprenant un boîtier (10) dans lequel sont formées des ouvertures d'écoulement radiales (13), pour lequel sont prévus une pluralité de segments d'écoulement adjacents (14, 15, 16, 17) dans la direction longitudinale, qui présentent chacun un certain nombre d'ouvertures d'écoulement circonférentielles espacées, et dans lequel est disposé un élément de filtration (20) pour les gaz de combustion, à l'intérieur du boîtier (10) dans la zone des segments d'écoulement (14, 15, 16, 17), pour lequel l'élément de filtration (20) possède différentes épaisseurs de paroi dans la zone d'au moins deux segments d'écoulement (14, 15, 16, 17) différents adjacents,
**caractérisé en ce que**
l'élément de filtration (20) possède une section d'entrée (21) à une extrémité longitudinale proximale, laquelle comprend une ouverture d'entrée de gaz longitudinale (27), et possède une partie de réduction (22) qui réarrange la partie d'entrée proximale (21) dans la direction d'écoulement de gaz, pour lequel l'épaisseur de paroi de l'élément de filtration (20) augmente de façon continue dans la section de réduction (22), et l'élément de filtration (20) comprend une partie de collecte (23), qui est disposé en aval de la section de réduction (22) dans la direction d'écoulement de gaz, ledit élément de filtration (20) possède dans la section de collecte (23) une épaisseur de paroi constante.

2. Diffuseur selon la revendication 1,
**caractérisé en ce que**
les différents segments d'écoulement adjacents (14, 15, 16, 17) comprennent chacun un nombre différent d'ouvertures d'écoulement circonférentielles espacées (13).

3. Diffuseur selon la revendication 1 ou la revendication 2,
**caractérisé en ce que**
les différents segments d'écoulement adjacents (14, 15, 16, 17) comprennent chacun des ouvertures d'écoulement circonférentielles espacées (13) avec une taille différente.

4. Diffuseur selon la revendication 2 ou la revendication 3,
**caractérisé en ce que**
le nombre et/ou la taille des ouvertures de sortie circonférentielles espacées (13) dans un segment d'écoulement (15) placé au milieu est plus grand(e) que dans une ou plusieurs segment(s) d'écoulement (14, 16) placé(s) sur les bords.

5. Diffuseur selon l'une quelconque des revendications précédentes, **caractérisé en ce que**
l'élément de filtration (20) présente un canal d'écoulement de gaz longitudinal (26) lequel comprend différentes sections de diamètres transversaux, en particulier au moins partiellement de façon à se réduire et/ou s'élargir continument.

6. Diffuseur selon la revendication 5,
**caractérisé en ce que**
le canal d'écoulement de gaz (26) forme un canal de passage (28) qui est ouvert à une extrémité longitudinale la plus éloignée de l'élément de filtration (20).

7. Diffuseur selon la revendication 5,
**caractérisé en ce que**
le canal d'écoulement de gaz (26) forme un canal de passage (28) qui est fermé à une extrémité longitudinale la plus éloignée de l'élément de filtration (20).

8. Diffuseur selon l'une des revendications précédentes,
**caractérisé en ce que**
l'élément de filtration (20) possède dans la section d'entrée (21) une épaisseur de paroi constante.

9. Diffuseur selon l'une quelconque des revendications précédentes, **caractérisé en ce que**
l'élément de filtration (20) comporte une partie d'élargissement (24), qui est disposé en aval de la partie de collecte (23) dans la direction d'écoulement de gaz, ledit élément de filtration (20) ayant dans la partie d'élargissement (24) une épaisseur de paroi se réduisant continument.

10. Diffuseur selon l'une quelconque des revendications précédentes,
**caractérisé en ce que**
l'élément de filtration (20) est réalisé symétrique axialement par rapport à un axe de symétrie, lequel est disposé perpendiculairement à un axe longitudinal (L) de l'élément de filtration (20).

11. Générateur de gaz, en particulier réalisé de forme toroïdale, pour un airbag conducteur de préférence, et/ou en particulier réalisé de forme tubulaire, pour un airbag passager avant et/ou un airbag genoux et/ou un airbag rideau et/ou un airbag latéral et/ou un airbag passager arrière et/ou un airbag de protection des piétons de préférence, avec un diffuseur selon l'une des revendications précédentes.

12. Module airbag, en particulier un module airbag conducteur et/ou un module airbag genoux et/ou un module airbag passager avant et/ou un module airbag latéral et/ou un module airbag passager arrière et/ou un module airbag piétons et/ou un module airbag rideau avec un générateur de gaz et/ou un diffuseur selon l'une des revendications précédentes.

13. Système de sécurité du véhicule avec un module airbag, un générateur de gaz et/ou un diffuseur selon l'une des revendications précédentes.
